# EUROPÄISCHE PATENTSCHRIFT

(11) **EP 2 532 577 B1**
(45) Veröffentlichungstag und Bekanntmachung des Hinweises auf die Patenterteilung: **31.05.2017**
(21) Anmeldenummer: 12170878.8
(22) Anmeldetag: 05.06.2012
(51) Int. Cl.: B63B 35/32, B63G 8/00, E02B 15/04

(54) **Unterseeboot**
Submarine
Submersible

(30) Priorität: 07.06.2011 DE 102011104122
(43) Veröffentlichungstag der Anmeldung: 12.12.2012
(73) Patentinhaber: ThyssenKrupp Marine Systems GmbH, 24143 Kiel (DE)
(72) Erfinder: Brandt, Dipl.-Ing. Dr. Hendrik, 24232 Schönkirchen (DE); Fischer, Dipl.-Ing. Jens, 24107 Kiel (DE)
(74) Vertreter: ThyssenKrupp Intellectual Property GmbH

(56) Entgegenhaltungen:
- US-A- 5 022 987
- US-A1- 2008 135 494

## Beschreibung

Die Erfindung betrifft ein Unterseeboot.

Mittlerweile ist die Off-Shore-Ölförderung in der Arktis aufgrund gestiegener Ölnachfrage und abnehmender anderer Ölvorkommen wirtschaftlich geworden. Kommt es hier aber während der Förderung zu Ölleckagen, erweist sich die Bekämpfung des austretenden Öls als besonders problematisch, wenn sich das Öl unterhalb einer Eisoberfläche sammelt und somit nicht direkt zugänglich ist. Bis zu einer gewissen Dicke können Eisschichten mit Eisbrechern gebrochen werden und anschließend das darunter befindliche Öl durch Abschöpfen, Abfackeln oder durch den Zusatz von Ölabbauprodukten bekämpft werden. Eine weitere Möglichkeit besteht darin, von einem Eisbrecher aus ein unbemanntes Tauchfahrzeug, wie es aus US 2008/0135494 A1 bekannt ist, auszusetzen, das Unterwasser das Öl aufsaugt und das Öl über eine Schlauchverbindung zu dem Überwasserschiff fördert. Bei Eisschichten größerer Dicke ist der Einsatz von Eisbrechern aber nicht mehr möglich.

Vor diesem Hintergrund liegt der Erfindung die Aufgabe zugrunde, auch bei solchen, mit einem Eisbrecher nicht mehr zu brechenden Eisschichten, eine Möglichkeit zur Verfügung zu stellen, unter der Eisschicht befindliches Öl zu bekämpfen.

Gelöst wird diese Aufgabe durch ein Unterseeboot mit den in Anspruch 1 angegebenen Merkmalen. Vorteilhafte Weiterbildungen dieses Unterseeboots ergeben sich aus den Unteransprüchen, der nachfolgenden Beschreibung sowie der Zeichnung. Hierbei können gemäß der Erfindung die in den Unteransprüchen angegebenen Merkmale jeweils für sich, aber auch in geeigneter Kombination die erfindungsgemäße Lösung gemäß Anspruch 1 weiter ausgestalten.

Die Grundidee der Erfindung ist es, Öl, das sich bei der Ölförderung in der Arktis nach Leckagen unterhalb einer Eisdecke in einer Ölblase sammelt, von unterhalb der Eisdecke mit einem zu der Ölblase getauchten Unterseeboot zu bekämpfen. D. h., gemäß der Erfindung wird ein Unterseeboot zur Verfügung gestellt, das zur Ölbekämpfung bei Tauchfahrt ausgebildet ist. Demzufolge ist es vor der Ölbekämpfung nicht mehr erforderlich, die über dem Öl befindliche Eisdecke aufzubrechen, um einen Zugang zu dem Öl zu erlangen.

Bei dem erfindungsgemäßen Unterseeboot handelt es sich um ein bemanntes Unterseeboot, das, da es in einem direkt an die Wasseroberfläche angrenzenden Bereich eingesetzt wird, nur für vergleichsweise geringe Tauchtiefen ausgelegt sein kann. Weil das Unterseeboot gegebenenfalls längere Zeit unter einer geschlossenen Eisdecke verbringen muss, weist es zweckmäßigerweise einen außenluftunabhängigen Antrieb, beispielsweise einen Brennstoffzellenantrieb auf. Zur Ölbekämpfung ist es mit Mitteln zur Aufnahme des unter der Eisoberfläche befindlichen Öls und/oder mit Mitteln zum Ausbringen von Ölabbaumitteln, wie chemische Dispergatoren oder Mittel zu Beschleunigung der Bioremediation, und/oder Ölbindemitteln ausgestattet.

Bevorzugt weist das erfindungsgemäße Unterseeboot eine Ölabsaugvorrichtung auf. Um das Öl in einer von der Eisdecke ausreichend beabstandeten Position absaugen zu können und so eine Kollision des Unterseebootes mit der Eisdecke zu vermeiden, weist das Unterseeboot weiter bevorzugt einen Rüssel als Teil der Ölabsaugvorrichtung auf. Dieser Rüssel kann an dem Unterseeboot außenseitig eines Druckkörpers des Unterseeboots im Bereich eines Oberdecks starr oder bewegbar befestigt sein, wobei er senkrecht oder vorzugsweise schräg in Richtung der Wasseroberfläche ausgerichtet ist. Bevorzugt ist allerdings ein Rüssel, der bei Nichteinsatz beispielsweise in dem Raum zwischen Druckkörper und Außenhaut, insbesondere im Bereich des Oberdecks angeordnet ist und zum Ölabsaugen aus diesem Raum heraus in seine Arbeitsposition bewegbar ist. An dem freien Ende des Rüssels kann ein Saugkopf in Form einer Saugdüse bzw. einer Saugglocke ausgebildet sein. Bootsseitig ist der Rüssel zweckmäßigerweise an einer Ölabsaugpumpe angeschlossen, mit der das Öl in das Unterseeboot oder in einen außerhalb des Unterseeboots befindlichen Tank gepumpt wird.

Während des Absaugens des Öls hält das Unterseeboot zweckmäßigerweise dynamisch seine Position unterhalb der Ölblase. Hierzu kann das erfindungsgemäße Unterseeboot vorteilhaft mit einem Hilfsantrieb beispielsweise mit einem Inline-Thruster, ausgestattet sein.

In einer erfindungsgemäßen Ausgestaltung ist der Rüssel flexibel ausgebildet, wobei der Rüssel in einem an sein freies Ende angrenzenden Abschnitt an einem ROV (Remotely Operated Vehicle), d.h. an einem ferngesteuerten, insbesondere kabelgeführten Unterwasserfahrzeug befestigt ist. Demzufolge ist der Rüssel ein Schlauch sein, der zur Ölabsaugung von einer in dem Zwischenraum zwischen dem Druckkörper des Unterseebootes und dem Oberdeck angeordneten motorisch betätigten Schlauchtrommel abgewickelt wird, wobei das freie Schlauchende mit dem daran angeordneten Saugdüse bzw. Saugglocke von dem ROV, an dem der Schlauch befestigt ist, ferngesteuert zu der Ölblase verfahren wird. Die Verwendung eines flexiblen Rüssels hat den Vorteil, dass zwischen dem Saugkopf und dem Unterseeboot keine starre Verbindung besteht. Berührungen des Saugkopfes bzw. des Rüssels mit der Eisunterseite gefährden nicht das Unterseeboot bzw. den Rüssel. Des Weiteren wirken sich Bewegungen des Unterseebootes nicht mehr auf die Positionierung des Saugkopfes aus, da die Positionierung des Rüssels, und damit des Saugkopfes, von dem ROV übernommen wird. Hierdurch ist eine besonders effiziente Ölabsaugung möglich.

Weiter vorteilhaft kann ein Unterseeboot, das eine Ölabsaugvorrichtung mit einem flexiblen, mit einem ROV verfahrbaren Rüssel aufweist, auch dazu verwendet werden, Treibstoff aus gesunkenen Schiffen abzusaugen. In diesem Fall positioniert sich das Unterseeboot in der Nähe des gesunkenen Schiffs, aber mit Abstand zu diesem Schiff. Mit dem ROV wird nun der Rüssel so an das Schiff herangefahren, dass eine an dem Rüssel ausgebildete Saugglocke an einer den Treibstoffbunker begrenzenden Bordwand des Schiffes zur Anlage kommt. Nachdem zuvor an der Bordwand eine Öffnung geschaffen worden ist, wird der Treibstoff mit der Ölabsaugvorrichtung des erfindungsgemäßen Unterseebootes aus dem Treibstoffbunker in das Unterseeboot oder in einen außerhalb des Unterseeboots befindlichen Tank gepumpt.

Die Lokalisierung einer unterhalb der Eisoberfläche befindlichen Ölansammlung kann anhand von Überwasser ermittelten Koordinaten erfolgen, die dann von dem Unterseeboot angesteuert werden. Besonders vorteilhaft weist das erfindungsgemäße Unterseeboot aber eine eigene Ölortungseinrichtung auf. Hierbei handelt es sich bevorzugt um ein Sonarsystem, mit dem Öl detektiert werden kann.

Mit der Ölabsaugvorrichtung des erfindungsgemäßen Unterseebootes wird in der Regel nicht nur Öl, sondern ein Seewasser/Öl-Gemisch angesaugt. Daher weist das Unterseeboot zweckmäßigerweise eine Öl/Wasser-Trennvorrichtung auf. Das in dieser Trennvorrichtung von dem Öl getrennte Wasser wird über eine an dem Unterseeboot ausgebildete Schleuse aus dem Unterseeboot nach außenbords gepumpt.

Zur Speicherung des abgesaugten Öls weist das erfindungsgemäße Unterseeboot vorteilhafterweise mindestens einen Öltank auf. Hierbei kann es sich um einen in dem Unterseeboot fest installierten Öltank handeln, dessen Fassungsvolumen dem Fassungsvermögen konventioneller Überwasserölbekämpfungsschiffe entspricht. Bevorzugt wird das Öl mittels einer ausgangsseitig eines Ölauslasses der Öl/Wasser-Trennvorrichtung angeordneten Pumpe in den Öltank gepumpt. Sobald der Öltank vollständig gefüllt ist, fährt das Unterseeboot in den nächsten eisfreien Hafen bzw. in eine eisfreie Zone, wo ein Überwassertankschiff auf das Unterseeboot wartet. Dort übergibt das Unterseeboot das Öl und nimmt gegebenenfalls Treibstoff und Proviant auf, um anschließend zu seinem Einsatzort zurückzukehren.

Statt eines fest installierten Öltanks kann das erfindungsgemäße Unterseeboot besonders vorteilhaft mehrere aus dem Unterseeboot ausbringbare Öltanks aufweisen. Bei diesen Öltanks handelt es sich vorzugsweise um flexible Tanks, die ohne Befüllung in dem Unterseeboot nur ein geringes Lagerungsvolumen einnehmen, deren Innenvolumen sich aber bei der Befüllung aufgrund der Flexibilität der Öltanks deutlich vergrößert. Die Befüllung dieser flexiblen Tanks erfolgt zweckmäßigerweise außerhalb des Unterseebootes. Dementsprechend weist das Unterseeboot bevorzugt eine Schleuse zum Ausbringen der Öltanks aus dem Unterseeboot auf.

Weiter vorteilhaft weist das erfindungsgemäße Unterseeboot eine Abfülleinrichtung zum Befüllen der flexiblen Öltanks auf. Diese Abfülleinrichtung ist bevorzugt am Ölausgang der Öl/Wasser-Trennvorrichtung angeordnet. Die Abfülleinrichtung weist bevorzugt eine Pumpe, einen Zwischenspeicher und einen Einfüllstutzen auf, der innerhalb des Unterseebootes an einen flexiblen Öltank anschließbar ist. Der Einfüllstutzen ist vorzugsweise innerhalb der Schleuse zum Ausbringen der flexiblen Öltanks angeordnet. Nach dem Anschließen des Öltanks an dem Einfüllstutzen wird der Öltank über die Schleuse durch Fluten derselben und anschließendes automatisches Öffnen eines äußeren Lukendeckels der Schleuse nach außerhalb des Unterseeboots gebracht und dort befüllt. Des Weiteren weist die Abfülleinrichtung Mittel auf, mit denen der Einfüllstutzen von innerhalb des Unterseebootes von dem flexiblen Tank nach dessen Befüllung getrennt werden kann. Um nach der Trennung des Einfüllstutzens von dem Öltank ein Auslaufen des Öls aus dem Öltank zu verhindern, ist der Öleinlass des Öltanks zweckmäßigerweise mit einem Rückschlagventil ausgestattet. Dieses Rückschlagventil ist bevorzugt in einem soliden Schlauchstück des Öltanks angeordnet, das den Öltank und den Einfüllstutzen verbindet.

Nach der Trennung des Einfüllstutzens von dem Öltank steigen die Öltanks auftriebsbedingt bis direkt unterhalb der Eisdecke auf, wo sie zu einem späteren Zeitpunkt ggf. von einem weiteren Unterseeboot oder bei Eisfreiheit von einem Überwasserschiff aufgenommen werden können und zu einem Hafen oder zu einem Überwasserschiff transportiert werden können. Zur Verbesserung der Auftriebseigenschaften der flexiblen Öltanks kann die Abfülleinrichtung vorteilhafterweise auch Mittel aufweisen, mit denen ein Gas in die Öltanks eingebracht werden kann.

Zweckmäßigerweise weist das erfindungsgemäße Unterseeboot einen Lagerraum auf, in dem die noch nicht befüllten, flexiblen Öltanks gelagert werden. Zum Transport der Öltanks von dem Lagerraum zu der Abfülleinrichtung kann in dem Unterseeboot vorteilhaft eine Transporteinrichtung vorgesehen sein. Diese Transporteinrichtung ist bevorzugt derart ausgebildet, dass sie einen Öltank in dem Lagerraum selbsttätig aufnimmt und zu der Abfülleinrichtung vor deren Einfüllstutzen und nach der Befestigung des Einfüllstutzens an dem Öltank zu der Schleuse zum Ausbringen des Öltanks transportiert.

Neben dem Absaugen von Öl kann der Rüssel der Absaugvorrichtung des erfindungsgemäßen Unterseebootes auch dazu dienen, chemische und/oder biologische Ölabbaumittel zu einer unterhalb einer Eisdecke gelegenen Ölblase zu verbringen. Hierzu ist der Rüssel vorzugsweise an eine Pumpe zum Ausbringen von Ölabbaumitteln anschließbar. Mittels dieser Pumpe werden die Ölabbaumittel von dem Unterseeboot über den Rüssel zu der Ölblase gefördert.

Nachfolgend ist die Erfindung anhand von in der Zeichnung dargestellten Ausführungsbeispielen näher erläutert. In der Zeichnung zeigt:
- Fig. 1: schematisch sehr stark vereinfacht ein zur Ölbekämpfung ausgebildetes Unterseeboot in einer ersten Ausführungsform im Einsatz,
- Fig. 2: schematisch sehr stark vereinfacht ein zur Ölbekämpfung ausgebildetes Unterseeboot in einer zweiten Ausführungsform im Einsatz,
- Fig. 3: schematisch sehr stark vereinfacht ein zur Ölbekämpfung ausgebildetes Unterseeboot in einer dritten Ausführungsform im Einsatz und

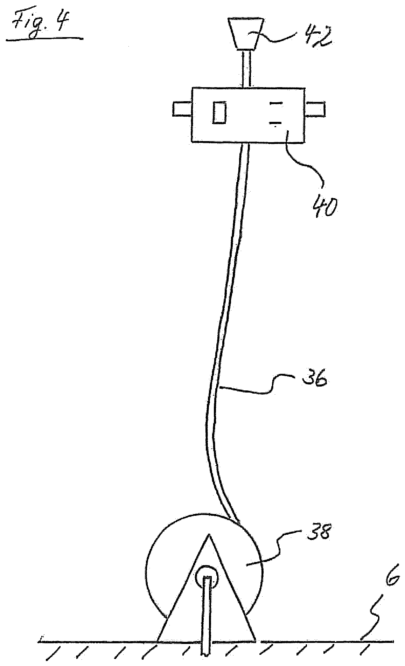

- Fig. 4: schematisch sehr stark vereinfacht einen Rüssel einer Ölabsaugvorrichtung des Unterseebootes nach Fig. 3.

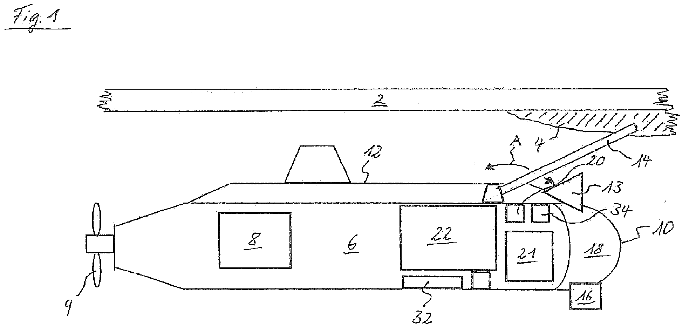

Die Figuren 1 bis 3 zeigen jeweils ein unter einer Eisdecke 2 getauchtes Unterseeboot. Direkt an der Unterseite der Eisdecke 2 hat sich bei der Ölförderung austretendes Öl in einer Ölblase 4 gesammelt.

Die Unterseeboote nach den Figuren 1 bis 3 weisen jeweils einen Druckkörper 6 auf. Angetrieben werden diese Unterseeboote jeweils von einem in dem Druckkörper 6 angeordneten außenluftunabhängigen elektrischen Antrieb 8, der einen Propeller 9 antreibt. Bugseitig und an der Oberseite sind die Druckkörper 6 der dargestellten Unterseeboote außen von einer Außenhaut 10 umgeben. Ein an der Oberseite der Druckkörper 6 beabstandet von dem Druckkörper 6 angeordneter Abschnitt der Außenhaut 10 bildet ein Oberdeck 12 der Unterseeboote. Darüber hinaus weisen die drei dargestellten Unterseeboote jeweils eine Ölabsaugvorrichtung auf. Zum Auffinden einer unter einer Eisdecke 2 befindlichen Ölblase 4 sind die Unterseeboote zudem jeweils mit einer Ölortungseinrichtung 13 ausgestattet, die von einer bugseitig im Bereich des Oberdecks 12 angeordneten Sonareinrichtung gebildet wird.

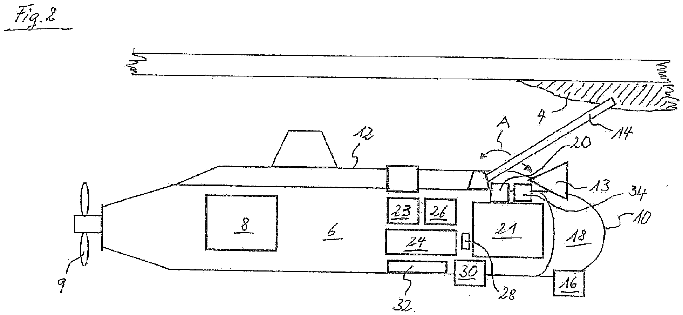

Bei den in den Figuren 1 und 2 gezeigten Ausführungsbeispielen weist die Ölabsaugvorrichtung einen Rüssel 14 auf, der von einem geraden, starren Rohr gebildet wird. Der Rüssel 14 ist auf der Außenseite des Druckkörpers 6 schwenkbar gelagert und durch eine an dem Oberdeck 12 ausgebildete nicht dargestellte verschließbare Öffnung von einer Lagerungsstellung zwischen dem Druckkörper 6 und dem Oberdeck 12 in Schwenkrichtung A in eine in den Figuren 1 und 2 dargestellte Betriebsstellung außerhalb des Unterseebootes verschwenkbar.

Zum Absaugen von Öl aus der unter der Eisdecke 2 befindlichen Ölblase 4 sind die in den Figuren 1 und 2 dargestellten Unterseeboote so positioniert, dass das vor dem Unterseeboot in der Betriebsstellung des Rüssels 14 wegweisende Ende des Rüssels 14 in die Ölblase 4 hineinragt. Die Unterseeboote selbst sind hierbei in ausreichendem Maße von der Eisdecke 2 beabstandet. In dieser Position werden die Unterseeboote dynamisch von einem Hilfsantrieb in Form eines Inline-Thrusters 16 gehalten. Der Inline-Thruster 16 ist bugseitig des Unterseebootes in einem Zwischenraum 18 zwischen dem Druckkörper 6 und der Außenhaut 10 angeordnet und von einer Lagerungsstellung innerhalb des Zwischenraumes 18 in eine Betriebsstellung außerhalb des Unterseebootes schwenkbar.

Bootsseitig ist der Rüssel 14 an einer Ölabsaugpumpe 20 angeschlossen. Innerhalb des Druckkörpers 6 wird das von der Ölabsaugpumpe 20 über den Rüssel 14 aus der Ölblase 4 geförderte Seewasser/Öl-Gemisch einer Öl/Wasser-Trennvorrichtung 21 zugeführt. Das dort von dem Öl getrennte Seewasser wird über eine in Figur 1 nicht dargestellte Schleuse aus dem Unterseeboot abgeführt.

Von der Öl/Wasser-Trennvorrichtung 21 wird das verbleibende Öl bei dem in Figur 1 dargestellten Unterseeboot mittels einer nicht dargestellten Förderpumpe in einen Öltank 22 gepumpt. Sobald der Öltank 22 vollständig gefüllt ist, sucht das Unterseeboot einen Hafen bzw. ein Überwasserschiff auf, wo das in dem Öltank 22 befindliche Öl übergeben wird. Anschließend fährt das Unterseeboot wieder zu seinem Einsatzort.

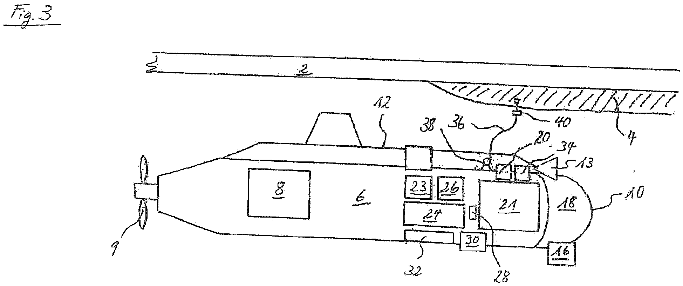

Bei den in den Figuren 2 und 3 dargestellten Unterseebooten wird das in der Öl/Wasser-Trennvorrichtung 21 getrennte Öl in einem Zwischenspeicher 23 gespeichert. Mit einer ausgangsseitig des Zwischenspeichers 23 angeordneten, in der Zeichnung nicht dargestellten Förderpumpe, wird das Öl einer Abfülleinrichtung zugeführt. Die Abfülleinrichtung weist eine Transporteinrichtung 24 auf, die selbsttätig flexible aus dem Unterseeboot ausbringbare Öltanks in einem Lagerraum 26 aufnimmt und vor einem Befüllstutzen 28 der Abfülleinrichtung in einer am Kiel des Unterseebootsmündenden Schleuse 30 positioniert. Der flexible Öltank wird nun mit dem Befüllstutzen 28 und damit mit der Abfülleinrichtung verbunden. Über die Schleuse 30 wird der an dem Befüllstutzen 28 befestigte flexible Öltank in die Außenumgebung des Unterseebootes verbracht und dort mit dem Öl aus dem Zwischenspeicher 23 befüllt. Nach Ende des Befüllvorganges wird der Befüllstutzen 28 von dem Öltank entkoppelt und der Öltank treibt in Richtung der Wasseroberfläche auf, wo er später von einem anderen Unterseeboot aufgenommen wird und zu einem Hafen bzw. zu einem Überwasserunterstützungsschiff verbracht wird.

Des Weiteren weisen die in den Figuren 1 und 2 dargestellten Unterseeboote jeweils einen Speichertank 32 für chemische Ölabbaumittel auf. Diese Ölabbaumittel können mittels einer Pumpe 34, die dem Rüssel 14 vorgeschaltet ist, über den Rüssel 14 in die Ölblase 4 verbracht werden.

Das in Figur 3 dargestellte Unterseeboot unterscheidet sich von dem in Figur 2 dargestellten Unterseeboot lediglich hinsichtlich der Ausgestaltung des Rüssels zum Absaugen des Öls aus der Ölblase 4. Das Unterseeboot nach Figur 2 weist einen Rüssel 36 auf, der von einem Schlauch gebildet wird, also flexibel ausgebildet ist. Der Rüssel 36 ist in einer Lagerungsposition auf einer in dem Zwischenraum zwischen dem Druckkörper 6 und dem Oberdeck 12 auf einer Schlauchtrommel 38 aufgerollt. Um den Rüssel 36 in seine Betriebsstellung zu verbringen, wird der Rüssel 36 von der Schlauchtrommel 38 abgerollt. In einem von der Schlauchtrommel 38 abgewandten Endabschnitt des Rüssels 36 ist der Rüssel 36 an einem ROV 40 befestigt. Mit dem ROV 40 wird der Rüssel 36 ferngelenkt derart in Richtung der Ölblase 4 verfahren, dass eine an dem freien Ende des Rüssels 36 angeordnete Absaugglocke 42 in die Ölblase 4 hineinragt. Anschließend erfolgen die Ölabsaugung und die Befüllung der flexiblen Öltanks wie anhand des Unterseeboots nach Figur 1 beschrieben.

### Bezugszeichenliste

- 2: - Eisdecke
- 4: - Ölblase
- 6: - Druckkörper
- 8: - Antrieb
- 9: - Propeller
- 10: - Außenhaut
- 12: - Oberdeck
- 13: - Ölortungseinrichtung
- 14: - Rüssel
- 16: - Inline-Thruster
- 18: - Zwischenraum
- 20: - Ölabsaugpumpe
- 21: - Öl/Wasser-Trennvorrichtung
- 22: - Öltank
- 23: - Zwischenspeicher
- 24: - Transporteinrichtung
- 26: - Lagerraum
- 28: - Befüllstutzen
- 30: - Schleuse
- 32: - Speichertank
- 34: - Pumpe
- 36: - Rüssel
- 38: - Schlauchtrommel
- 40: - ROV
- 42: - Absaugglocke

- A: - Schwenkrichtung

## Patentansprüche

1. Unterseeboot, welches zur Ölbekämpfung bei Tauchfahrt ausgebildet ist und einen Rüssel (36) aufweist, der mit einer in das Unterseeboot führenden Leitung leitungsverbunden ist, wobei der Rüssel (36) flexibel ausgebildet und in einem an sein freies Ende angrenzenden Abschnitt an einem Remotely Operated Vehicle (40) befestigt ist, **dadurch gekennzeichnet, dass** der Rüssel als Schlauch ausgebildet ist, der zur Ölabsaugung von einer in dem Zwischenraum zwischen dem Druckkörper (6) des Unterseebootes und dem Oberdeck (12) angeordneten motorisch betätigten Schlauchtrommel (38) abgewickelt wird.

2. Unterseeboot nach Anspruch 1, bei dem der Rüssel (36) Teil einer Ölabsaugvorrichtung und/oder Teil einer Vorrichtung zum Ausbringen von Ölabbaumitteln ist.

3. Unterseeboot nach einem der vorangehenden Ansprüche, welches eine Ölortungseinrichtung (13) aufweist.

4. Unterseeboot nach einem der vorangehenden Ansprüche, welches eine Öl/Wasser-Trennvorrichtung (21) aufweist.

5. Unterseeboot nach einem der vorangehenden Ansprüche, welches mindestens einen Öltank (22) zur Speicherung abgesaugten Öls aufweist.

6. Unterseeboot nach einem der vorangehenden Ansprüche, welches mehrere aus dem Unterseeboot ausbringbare Öltanks auf- weist.

7. Unterseeboot nach Anspruch 3, welches eine Abfülleinrichtung zum Befüllen der Öltanks aufweist.

8. Unterseeboot nach Anspruch 4, welches eine Transporteinrichtung (24) zum Transport der Öltanks von einem Lageraum (26) zu der Abfülleinrichtung aufweist.

9. Unterseeboot nach einem der Ansprüche 6 bis 8, welches eine Schleuse (30) zum Ausbringen der Öltanks aufweist.

10. Unterseeboot nach einem der Ansprüche 1 bis 9, bei dem der Rüssel (14, 36) an eine Pumpe (34) zum Ausbringen von Ölabbau- mitteln anschließbar ist.

## Claims

1. Submarine which is designed for recovering oil while submerged and comprises a nozzle (36), which is line-connected to a line leading into the submarine, wherein the nozzle (36) is of flexible design and has a portion adjacent to its free end fastened on a remotely operated vehicle (40), **characterized in that** the nozzle is designed in the form of a hose which, for removing oil by suction, is unwound from a motor-activated hose reel (38) arranged in the interspace between the pressure hull (6) of the submarine and the top deck (12).

2. Submarine according to Claim 1, in which the nozzle (36) is part of an oil-removal apparatus and/or part of an apparatus for discharging oil-degradation agents.

3. Submarine according to either of the preceding claims, which comprises an oil-detecting apparatus (13).

4. Submarine according to one of the preceding claims, which comprises an oil/water-separating apparatus (21).

5. Submarine according to one of the preceding claims, which comprises at least one oil tank (22) for storing oil which has been removed by suction.

6. Submarine according to one of the preceding claims, which comprises a plurality of oil tanks which can be removed from the submarine.

7. Submarine according to Claim 3, which comprises a filling apparatus for filling the oil tanks.

8. Submarine according to Claim 4, which comprises a transporting apparatus (24) for transporting the oil tank from a storage space (26) to the filling apparatus.

9. Submarine according to one of Claims 6 to 8, which comprises an airlock (30) for the removal of the oil tanks.

10. Submarine according to one of Claims 1 to 9, in which the nozzle (14, 36) can be connected to a pump (34) for discharging oil-degradation agents.

## Revendications

1. Submersible, qui est conçu pour lutter en plongée contre la pollution par le pétrole et qui présente une trompe aspirante (36), qui est raccordée à une conduite menant dans le submersible, dans lequel la trompe aspirante (36) est flexible et est fixée par une partie voisine de son extrémité libre à un Véhicule Commandé à Distance (40), **caractérisé en ce que** la trompe aspirante est réalisée en forme de tuyau souple, qui est déroulé pour l'aspiration du pétrole à partir d'un tambour de tuyau (38) actionné par un moteur et disposé dans la chambre intermédiaire entre le corps (6) sous pression du submersible et le pont supérieur (12).

2. Submersible selon la revendication 1, dans lequel la trompe aspirante (36) fait partie d'un dispositif d'aspiration du pétrole et/ou fait partie d'un dispositif de dispersion d'agents de dégradation du pétrole.

3. Submersible selon l'une quelconque des revendications précédentes, qui présente un dispositif de localisation du pétrole (13).

4. Submersible selon l'une quelconque des revendications précédentes, qui présente un dispositif de séparation pétrole/eau (21).

5. Submersible selon l'une quelconque des revendications précédentes, qui présente au moins un réservoir de pétrole (22) pour accumuler le pétrole aspiré.

6. Submersible selon l'une quelconque des revendications précédentes, qui présente plusieurs réservoirs de pétrole pouvant être déchargés du submersible.

7. Submersible selon la revendication 3, qui présente un dispositif de remplissage pour le remplissage du réservoir de pétrole.

8. Submersible selon la revendication 4, qui présente un dispositif de transport (24) pour le transport du réservoir de pétrole depuis un espace de stockage (26) jusqu'au dispositif de remplissage.

9. Submersible selon l'une quelconque des revendications 6 à 8, qui présente un sas (30) pour le déchargement du réservoir de pétrole.

10. Submersible selon l'une quelconque des revendications 1 à 9, dans lequel la trompe aspirante (14, 36) peut être raccordée à une pompe (34) pour disperser des agents de dégradation du pétrole.
